## Europäisches Patentamt

## European Patent Office

## Office européen des brevets

(11) Veröffentlichungsnummer: **0 238 910**
**B1**

(12) **EUROPÄISCHE PATENTSCHRIFT**

(45) Veröffentlichungstag der Patentschrift:
05.09.90

(51) Int. Cl.⁵: **H04B 17/00, H04B 7/155**

(21) Anmeldenummer: 87103185.2

(22) Anmeldetag: 06.03.87

(54) Einrichtung zur Einfügung lokaler, analoger Dienstsignale in Digital-Dienstkanäle einer Richtfunkverbindung.

(30) Priorität: 10.03.86 DE 3607881

(43) Veröffentlichungstag der Anmeldung:
30.09.87 Patentblatt 87/40

(45) Bekanntmachung des Hinweises auf die Patenterteilung:
05.09.90 Patentblatt 90/36

(84) Benannte Vertragsstaaten:
AT CH DE FR GB IT LI NL

(56) Entgegenhaltungen:
FR-A- 2 235 541
FR-A- 2 522 908

PATENT ABSTRACTS OF JAPAN, Band 10, Nr. 20 (E-376)[2077], 25. Januar 1986; & JP-A-60 180 343 (TOSHIBA K.K.) 14-09-1985
N.E.C. RESEARCH AND DEVELOPMENT, Nr. 74, Juli 1984, Seiten 80-90, Tokyo, JP; T. KYUZAKI et al.: "2nd-Generation low power consumption (LPC) microwave radio equipment"

(73) Patentinhaber: Siemens Aktiengesellschaft, Wittelsbacherplatz 2, D-8000 München 2(DE)

(72) Erfinder: Barth, Hermann, Dipl.-Ing., Forstenrieder Allee 236, D-8000 München 71(DE)
Erfinder: Nossek, Josef A., Dr. techn., Zugspitzstrasse 19, D-8127 Iffeldorf(DE)
Erfinder: Kucera, Walter, Anton-Baumgartner-Strasse 44/B5/202, A-1232 Wien(AT)
Erfinder: Tiwald, Eckard, Dipl.-Ing., Geologengasse 6, A-1030 Wien(AT)

## Beschreibung

Die Erfindung bezieht sich auf eine Einrichtung zur Einfügung lokaler, analoger Dienstsignale in Digital-Dienstkanäle einer Richtfunkverbindung, bei der die Endstellen und die zwischen diesen angeordneten Zwischenstellen mit einem Dienstkanal-Gerät versehen sind (siehe z.B. Dokument FR-A 2 522 908, das ein Verfahren zur Übertragung eines Dienstsignales zeigt).

Weitverkehrsverbindungen stellen neben dem jeweiligen Hauptkanal einen oder mehrere sog. Dienstkanäle zur Verfügung, über die die für den Betrieb und die Wartung notwendigen Signale übertragen werden können. Diese Dienstkanäle werden also beispielsweise für Sprechverbindungen zwischen den Richtfunkstationen sowie zur Übertragung von Fernüberwachungs- und Fernwirksignalen benutzt. Ebenso können die auf einer Station lokal anfallenden Daten zur Qualitäts- bzw. Verfügbarkeitsanalyse und zur Fehlerortung über Dienstkanäle zur zentralen Erfassung auf eine Endstelle übertragen werden.

Signale dieser Dienste wurden bei Analog-FM-Richtfunkverbindungen normalerweise im Frequenzbereich unterhalb des Basisbands übertragen. Bei Digital-Richtfunkverbindungen könnten diese Dienstsignale auch den Modulationsträger zusätzlich in der Frequenz modulieren. Jedoch stellt diese Frequenzmodulation für die dort benutzte Quadratur-Amplituden-Modulation (QAM) ein Störsignal dar, das insbesondere bei 16 und 64 QAM zu einer unerwünschten Degradation führt. Zur Vermeidung einer solchen Degradation sind Digital-Richtfunksysteme höherer Hierarchiestufen mit Digital-Dienstkanälen ausgerüstet, die die Einrichtung der gewünschten Dienste ermöglichen. Das Dienstkanalgerät (DK-Gerät) stellt dabei mit Analog-Digital-Umsetzern die Verbindung zwischen den gewöhnlich analog vorliegenden Dienstsignalen und der zur Übertragung benötigten digitalen Signalform her.

Bei der Nutzung dieser Digital-Dienstkanäle zur Übertragung eines analogen Signals (Sprachsignale oder FSK-Signale von Fernüberwachungseinrichtungen) muß es dabei auf jeder Zwischenstelle D/A-gewandelt und nach einer Überlagerung mit dem lokal anfallenden Signal, zur weiteren Übertragung wieder A/D-gewandelt werden. Bei einer großen Zahl von A/D-Wandlungen übersteigen die dabei auftretenden Quantisierungsverzerrungen zulässige Grenzen.

Der Erfindung liegt die Aufgabe zugrunde, für eine Einrichtung der eingangs beschriebenen Art eine Lösung zu schaffen, mit der die bei der Wandlung auftretenden Signalverzerrungen möglichst klein gehalten werden können.

Diese Aufgabe wird gemäß der Erfindung in der Weise gelöst, daß im Dienstkanal-Gerät der Zwischenstellen Elemente zur digitalen Dienstsignalüberlagerung vorgesehen sind derart, daß die analogen Dienstsignale (z.B. die FSK-signale einer Fernüberwachung vom Paralleltyp) über einen PCM-Codec als A/D-Wandler und einen nachfolgenden Expander einer digitalen Überlagerungseinrichtung mit Sättigungskennlinie zugeführt und in dieser mit den die betreffende Zwischenstelle durchlaufenden, aus dem Demodulator ausgekoppelten und ebenfalls über einen Expander geführten Dienstsignalen in digitaler Form überlagert werden und das Summensignal anschließend über einen Kompanderr dem Demodulator der Zwischenstelle zur weiteren Übertragung wieder zugeführt wird. Jedes analoge Signal wird dann an seiner ersten Einspeisestelle einmal A/D-gewandelt und in dieser Signalform bis zum letzten Empfangsort übertragen.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

Es zeigen

Figur 1 eine Richtfunkverbindung im Blockschaltbild und

Figur 2 ein Dienstkanal-Gerät für eine Zwischenstelle der Richtfunkverbindung im Blockschaltbild.

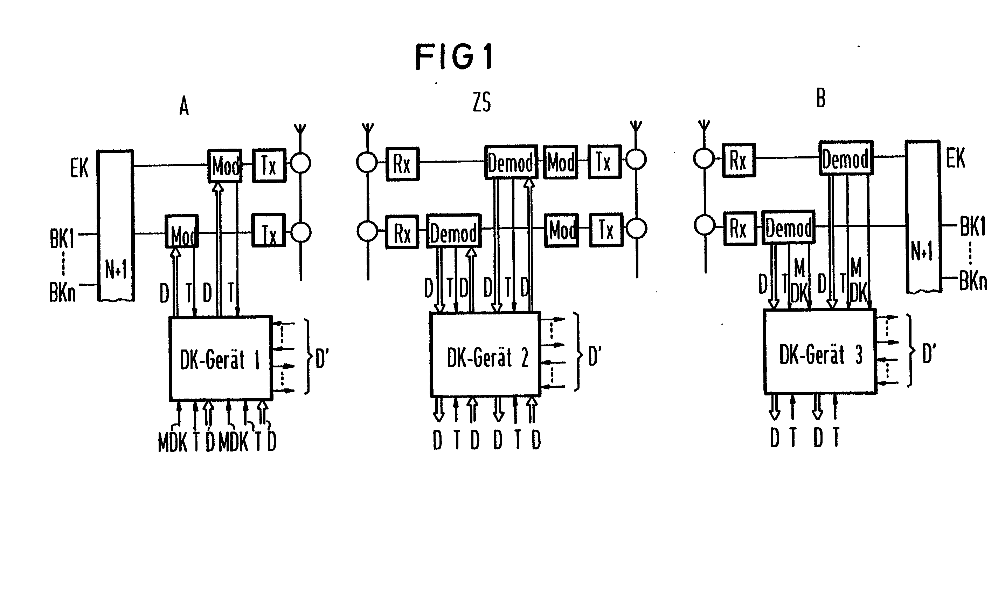

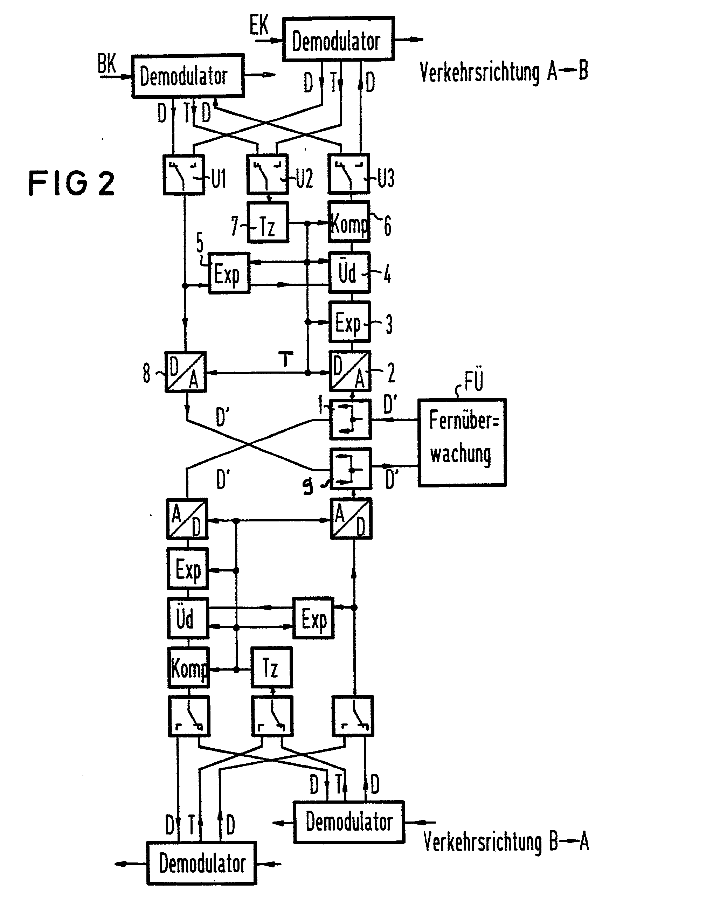

In Figur 1 ist eine Richtfunkverbindung mit den Endstellen A und B und einer Zwischenstelle ZS und die Zusammenschaltung der Dienstkanal-Geräte DKG mit den Richtfunkgeräten auf End- und Zwischenstellen dargestellt. Für jede Station ist ein solches Gerät vorgesehen, über das die Dienstsignale beider Übertragungsrichtungen laufen. In der Figur sind lediglich die Richtfunkgeräte auf den Endstellen und der Zwischenstelle für eine Übertragungsrichtung dargestellt; für die in gleicher Weise aufgebaute Gegenrichtung sind die entsprechenden Signale am jeweiligen Dienstkanal-Gerät an deren Unterseite eingezeichnet. In jeder Verkehrsrichtung erfolgt die Dienstsignalübertragung zur Erhöhung der Betriebssicherheit auf zwei RF-Kanälen, die jeweils mit einer im Dienstkanal-Gerät enthaltenen (1+1)-Ersatzschalteinrichtung zusammengefaßt sind. Die (1+1)-Ersatzschalteinrichtung (ihre Umschaltelemente sind in Figur 2 dargestellt) erhält ihre Umschaltkriterien von den Endstellendemodulatoren. Ein Defekt eines Dienstkanalgerätes einer Zwischenstelle bewirkt ein Durchschalten der Dienstkanäle in den angeschlossenen Demodulatoren, um den Dienstbetrieb aufrechtzuerhalten.

In den Endstellen enthalten der Ersatzkanal EK und die Betriebskanäle BK1..BKn sendeseitig jeweils einen Richtfunk-Modulator Mod, über den die Dienstsignale eingespeist werden und einen Richtfunksender Tx sowie empfangsseitig einen Richtfunkempfänger Rx und einen Richtfunk-Demodulator Demod zur Auskopplung der Dienstsignale. In Figur 1 sind in der Endstelle A die Sendeeinrichtungen, in Endstelle B die betreffenden Empfangseinrichtungen dargestellt. Die an die Dienstkanal-Geräte DKG1 und DKG2 geführten Leitungsanschlüsse mit Richtungspfeilen, die auch für das Dienstkanal-Gerät DKG3 der Zwischenstelle gelten, haben folgende Bedeutung: D=Dienstsignale digital, T=Taktsignale, MDK=Meldung DK gestört, D'=Dienstsignale analog.

Die Zwischenstelle ZS enthält im Ersatzkanal EK sowie in den Betriebskanälen BK1..BKn jeweils einen Richtfunk-Empfänger Rx, einen Richtfunk-Demodulator Demod, einen Richtfunk-Modulator Mod sowie einen Richtfunksender Tx. Die Dienstsignale werden auf den Zwischenstellen am Demodulator ausgekoppelt und auch eingespeist.

Zur Überwachung · der Verbindung hinsichtlich Unterbrechung und Qualität wird ein Richtfunkrahmen benutzt, der neben der Übertragung systeminterner und funkfeldspezifischer Informationen auch die bereits genannten Digital-Dienstkanäle zur Verfügung stellt. Der im Endstellenmodulator z.B. in das 140-Mbit/s-Basisbandsignal eingesetzte Richtfunkrahmen durchläuft den gesamten Schaltabschnitt. Er wird erst im Endstellendemodulator wieder ausgeblendet. Die regenerierenden Zwischenstellen-Demodulatoren erlauben jedoch ein Überschreiben der Dienstkanalbits im Richtfunkrahmen für die Einrichtung sog. Omnibuskanäle. Bei Unterbrechung einer Richtfunkverbindung schaltet sich der zuerst folgende intakte Zwischenstellen-Modulator automatisch auf Endstellenbetrieb mit Aufbau eines neuen Richtfunkrahmens. Damit ist die Überwachung und die Dienstsignalübertragung auf der Restverbindung weiterhin möglich.

Ein Ziel bei der Konzeption des Richtfunkrahmens war es, durch seine Einfügung in das 140Mbit/s-Basisbandsignal keinen Stopfjitter zu verursachen. Damit ist aber die Rahmenfrequenz nicht mehr frei wählbar und für die Dienstkanäle eine standardisierte Bitrate von z.B. 64 kbit/s nicht unmittelbar erreichbar. Für die mit dem Dienstkanal-Gerät versehenen Dienste ist dies jedoch ein Vorteil, da Kapazität für die Einrichtung eines Stopfrahmens bleibt.

Wegen der Synchronität des Richtfunkrahmens mit dem Basisbandsignal überträgt sich dessen nach CCITT-Empfehlung erlaubte Bitratentoleranz auch auf die Dienstkanalbitrate der Richtfunkmodems. Aus diesem Grund erfolgt die Analog-Digital-Umsetzung im Dienstkanal-Gerät mit einem vom Modem gelieferten Takt. Die Übergabe der digitalisierten Dienstsignale zum Modem geschieht über eine kontradirektionale Schnittstelle.

·Figur 2 zeigt ein Dienstkanal-Gerät einer Zwischenstelle, anhand dessen die Dienstsignaldurchschaltung auf Zwischenstellen mit digitaler Überlagerung lokaler, analoger Dienstsignale erläutert werden soll. Mit FÜ ist dabei eine Fernüberwachung bezeichnet, deren analoge Dienstsignale D' in der jeweiligen Zwischenstelle eingespeist bzw. aus dieser ausgekoppelt werden. Bei dieser parallelen Fernüberwachung müssen die Analog/Digital-Umsetzer aller Zwischenstellen immer in Betrieb sein. Zur Minimierung der Zahl der einzelnen Umsetzungen wird das auf einerZwischenstelle ankommende Fernüberwachungssignal mit dem lokal erzeugten in der digitalisierten Form überlagert. Die Digitalisierung erfolgt dabei in PCM-Codecs. Diese sind in der Figur 2 als D/A-Wandler bezeichnet.

In Figur 2 sind die Einrichtungen des Dienstkanal-Gerätes für beide Übertragungsrichtungen dargestellt (Verkehrsrichtung Endstelle A nach Endstelle B oben, Endstelle B nach Endstelle A unten). Im realisierten Aufbau sind die entsprechenden Elemente nur einmal vorhanden, da sie im Zeitmultiplex für beide Richtungen benutzt werden.

Die auf der Zwischenstelle einzuspeisenden analogen Dienstsignale D' werden über eine Signalverzweigung 1 auf einen PCM-Codec als A/D-Wandler 2 gegeben, in dem sie digitalisiert werden. Dem A/D-Wandler 2 ist ein Expander 3 nachgeschaltet, in dem das digitalisierte FÜ-Signal vor der digitalen Überlagerung expandiert wird. Danach erfolgt in einem digitalen Überlagerer 4 eine Addition des digitalisierten und expandierten FÜ-Signals mit einem die Zwischenstelle durchlaufenden digitalen Signal D, das aus dem Demodulator der Zwischenstelle ausgekoppelt und über einen Umschalter U1 und einen Expander 5 der digitalen Überlagerungseinrichtung 4 zugeführt wird. Nach der Addition wird das Summensignal (PCM-Wort) im Kompander 6 kompandiert und über einen Umschalter U3 zur weiteren Übertragung wieder dem Demodulator zugeführt. Wesentlich ist dabei, daß vor der digitalen Überlagerung von zwei Signalen auf Zwischenstellen jedes PCM-Wort mittels eines eingefügten Rahmens erkennbar ist. Zur Synchronisation dieses Vorgangs ist ein eigener Rahmen in das Dienstsignal eingeblendet. Dabei sind die digitale Überlagerungseinrichtung 4, die Expander 3 und 5 sowie der Kompander 6 mit einer Taktzentrale 7 verbunden, der ein Takt T vom Demodulator über einen Umschalter U2 zugeführt wird. Über die Umschalter U1, U2 und U3 erfolgt eine gegebenenfalls erforderliche Umschaltung der digitalen Signale und des Taktes vom Demodulator eines Betriebskanales BK an den Demodulator des Ersatzkanales EK. Ein aus der betreffenden Zwischenstelle auszukoppelndes digitales Signal wird über einen D/A-Wandler 8 und eine Signalverzweigung 9 als analoges Dienstsignal D' der Fernüberwachung FÜ zugeführt.

**Patentansprüche**

1. Einrichtung zur Einfügung lokaler, analoger Dienstsignale in Digital-Dienstkanäle einer Richtfunkverbindung, bei der die Endstellen und die zwischen diesen angeordneten Zwischenstellen mit einem Dienstkanal-Gerät versehen sind, **dadurch gekennzeichnet,** daß im Dienstkanal-Gerät der Zwischenstellen Elemente zur digitalen Dienstsignalüberlagerung vorgesehen sind derart, daß die analogen Dienstsignale, z.B. die FSK-Signale einer Fernüberwachung (FÜ) vom Paralleltyp über einen PCM-Codec als A/D-Wandler (2) und einen nachfolgenden Expander (3) einer digitalen Überlagerungseinrichtung mit Sättigungskennlinie zugeführt und in dieser mit den die betreffende Zwischenstelle durchlaufenden, aus dem Demodulator ausgekoppelten und ebenfalls über einen Expander (5) geführten Dienstsignalen digitaler Form überlagert werden (4) und das Summensignal anschließend über einen Kompander (6) dem Demodulator der Zwischenstelle zur weiteren Übertragung wieder zugeführt wird.

2. Einrichtung nach Anspruch 1, **dadurch gekennzeichnet,** daß die digitale Überlagerungseinrichtung (4), die Expander (5, 3) und der Kompander vom Takt einer Taktzentrale (7) des Modems angesteuert werden.

3. Einrichtung nach Anspruch 1 oder 2,
**dadurch gekennzeichnet,**
daß die digitale Überlagerungseinrichtung, die Expander und der Kompander im Zeitmultiplex für beide Verkehrsrichtungen benutzt werden.

4. Einrichtung nach Anspruch 3,
**dadurch gekennzeichnet,**
daß die digitale Überlagerungseinrichtung, die Expander und der Kompander rein digital ausgebildet sind mit Mikroprozessoren und in ROM's abgespeicherten Expander- und Kompander-Kennlinien.

5. Einrichtung nach einem der Ansprüche 1 bis 4,
**dadurch gekennzeichnet,**
daß Schalteinrichtungen vorgesehen sind zur wahlweisen Anschaltung der betreffenden Elemente des Dienstkanal-Gerätes an den Demodulator eines Ersatzkanales.

## Claims

1. Apparatus for inserting local analog service signals into digital service channels of a radio relay link, in which the terminal stations and the intermediate stations arranged between the latter are provided with a service channel device, characterized in that elements are provided in the service channel device of the intermediate stations for digital service signal superimposition in such a way that the analog service signals, e.g. the FSK signals of a remote monitoring device (FÜ) of the parallel type, are supplied via a PCM codec as A/D converter (2) and a following expander (3) to a digital superimposing device with saturation curve, and are superimposed in the latter (4) with the service signals in digital form which pass through the respective intermediate station, are coupled out of the demodulator and are likewise conducted via an expander (5), and the composite signal is subsequently supplied via a compander (6) to the demodulator of the intermediate station again for onward transmission.

2. Apparatus according to Claim 1, characterized in that the digital superimposing device (4), the expanders (5, 3) and the compander (6) are driven by the clock signal of a central clock (7) of the modem.

3. Apparatus according to Claim 1 or 2, characterized in that the digital superimposing device, the expanders and the compander are used in time-division multiplexing for both traffic directions.

4. Apparatus according to Claim 3, characterized in that the digital superimposing device, the expanders and the compander are constructed to be purely digital, with microprocessors and expander curves and compander curves stored in ROMs.

5. Apparatus according to one of Claims 1 to 4, characterized in that switching devices are provided for the selective connection of the respective elements of the service channel device to the demodulator of a standby channel.

## Revendications

1. Dispositif pour insérer des signaux analogiques locaux de service dans des canaux de service d'une numériques liaison hertzienne, dans laquelle des postes terminaux et les postes intermédiaires situés entre ces postes terminaux sont équipés d'un appareil à canaux de service, caractérisé par le fait que dans l'appareil à canaux de service des postes intermédiaires, il est prévu des éléments pour réaliser la superposition numérique de signaux de service de telle sorte que les signaux de service analogiques, par exemple les signaux FSK d'un dispositif de contrôle à distance (FÜ) du type parallèle, sont envoyés par l'intermédiaire d'un codeur-décodeur MIC réalisé sous la forme d'un convertisseur analogique/numérique (2), et par l'intermédiaire d'un expanseur (3) monté en aval, à un dispositif numérique de superposition possédant une courbe caractéristique de saturation et qu'à ces signaux sont superposés (4), dans ce dispositif, les signaux de service de forme numérique, traversant le poste intermédiaire considéré, extraits d démodulateur par découplage et envoyés également au moyen d'un expanseur (5), et le signal somme est ensuite envoyé à nouveau, par l'intermédiaire d'un compresseur-expanseur (6), au démodulateur du poste intermédiaire, en vue de sa transmission ultérieure.

2. Dispositif suivant la revendication 1, caractérisé par le fait que le dispositif numérique de superposition (4), les expanseurs (5, 3) et le compresseur-expanseur (6) sont commandés par la cadence d'un central du modem, qui délivre la cadence.

3. Dispositif suivant la revendication 1 ou 2, caractérisé par le fait que le dispositif numérique de superposition, les expanseurs et le compresseur-expanseur sont utilisés avec un multiplexage temporel pour les deux sens de transmission.

4. Dispositif suivant la revendication 3, caractérisé par le fait que le dispositif numérique de superposition, les expanseurs et le compresseur-expanseur sont réalisés sous forme purement numérique au moyen de microprocesseurs, les courbes caractéristiques des expanseurs et du compresseur-expanseur étant mémorisées dans des mémoires ROM.

5. Dispositif suivant l'une des revendications 1 à 4, caractérisé par le fait qu'il est prévu des dispositifs de commutation permettant de raccorder au choix les éléments considérés de l'appareil à canaux de service au démodulateur d'un canal de remplacement.

# FIG 1

EP 0 238 910 B1

**FIG 2**

Verkehrsrichtung A—B

Verkehrsrichtung B—A